Europäisches Patentamt

European Patent Office

Office européen des brevets

(19)

(11) EP 0 548 874 B1

(12) **FASCICULE DE BREVET EUROPEEN**

(45) Date de publication et mention
de la délivrance du brevet:
**13.03.1996 Bulletin 1996/11**

(51) Int Cl.6: **G01B 11/06**, G01B 21/08

(21) Numéro de dépôt: **92121690.9**

(22) Date de dépôt: **21.12.1992**

(54) **Dispositif de mesure d'épaisseur d'un produit en feuille**

Vorrichtung zum Messen der Dicke eines Blattproduktes

Device for measuring the thickness of a sheet product

(84) Etats contractants désignés:
**DE FR GB NL**

(30) Priorité: **23.12.1991 FR 9116029**

(43) Date de publication de la demande:
**30.06.1993 Bulletin 1993/26**

(73) Titulaire: **NEOPOST INDUSTRIE**
**F-92220 Bagneux (FR)**

(72) Inventeurs:
• **Krasuski, Marek**
**F-92260 Fontenay aux Roses (FR)**
• **Mazeiller, Dominique**
**F-95220 Herblay (FR)**

(74) Mandataire: **Weinmiller, Jürgen et al**
**Lennéstrasse 9**
**Postfach 24**
**D-82336 Feldafing (DE)**

(56) Documents cités:
**EP-A- 0 329 081        GB-A- 2 066 471**
**US-A- 4 121 716**

• **CONFERENCE RECORD OF THE 1990 IEEE INDUSTRY APPLICATIONS SOCIETY ANNUAL MEETING, PART II, 7-12 octobre 1990, Seattle, Washington, US, pp. 1852-1855; S. BEROS et al.: 'A new method of dynamic obtaining the wet sheet thickness data in fiber cement processing plant'**
• **IBM TECHNICAL DISCLOSURE BULLETIN vol. 26, no. 4, Septembre 1983, pages 1945-1946; D. DECKER et al.: 'Rotating coded disc converts thickness measurements to pulse-width modulated signal'**

## Description

La présente invention concerne la mesure d'épaisseur des produits plats ou en feuilles, en particulier pendant que ces produits sont en défilement, en vue notamment de la détection d'un passage d'un double. L'invention s'applique notamment dans les domaines de la distribution de feuilles de papier une par une, en particulier le traitement de courrier, en vue d'éliminer le risque de libérer deux papiers au lieu de un et d'insérer deux documents dans une enveloppe.

Dans ce domaine, les brevets US-4,121,716 et EP-0 376 496 traitent du problème spécifique de la détection de double ou d'épaisseur.

Le premier décrit un système automatique pour la détection de double et le triage de documents, qui compare les épaisseurs des documents successifs passant sur un tambour rotatif. Deux galets (un au niveau de deux documents consécutifs) sont appliqués élastiquement contre le tambour. Les galets sont portés par des leviers articulés dont les autres extrémités portent chacune un miroir. Ces miroirs réfléchissent un rayon lumineux entre une source et un récepteur. Si un double se présente sous un galet, il se soulève plus que l'autre, ce qui modifie la position et l'orientation du miroir correspondant. Le rayon lumineux ne parvient plus sur le récepteur qui émet un signal approprié vers un circuit logique.

Le second décrit un dispositif de détection de double associé à un dépileur (singulator). Un corps magnétique multipolaire est lié à un galet maintenu appliqué contre des feuilles en défilement, et quand l'épaisseur varie, le corps magnétique se déplace devant un réseau de capteurs de champs magnétique, en particulier des capteurs à effet Hall. Ce brevet a pour objet de commander la vitesse de transport de documents en fonction de leur épaisseur dès qu'ils pénetrent dans la machine de traitement du courrier à haut débit

Un dispositif selon le préambule de la revendication 1 ci-jointe est connu, par exemple à partir du document EP-0 329 081 A1.

L'état de la technique révèle en fait l'existence de moyens de comparaison dimensionnelle, mais pas celle de moyens véritables de mesure dimensionnelle pour l'obtention d'une détection précise, fiable et programmable.

La présente invention se propose donc de remédier à cet inconvénient avec un dispositif de mesure d'épaisseur destiné à la détection entièrement automatique et programmable d'une alimentation double en feuilles minces, papier ou autre, notamment du courrier.

L'invention a pour objet un dispositif de mesure d'épaisseur d'une feuille de courrier en défilement dans une machine de pliage et d'insertion de documents avant affranchissement comportant des moyens de palpage fournissant des signaux électriques et des moyens de traitement desdits signaux électriques, les moyens de palpage comportant un drapeau solidaire d'un levier de palpage, coopérant avec un émetteur lumineux et un détecteur sensible aux rayons lumineux, caractérisé en ce que le drapeau est constitué par un secteur comportant des fentes multiples, le drapeau étant disposé pour pouvoir occulter entre les fentes des rayons lumineux dirigés vers le détecteur; le détecteur est un codeur optique délivrant des impulsions à chaque passage d'une fente du drapeau devant ledit codeur; le codeur optique est un codeur incrémentiel à deux voies de sortie disposées en quadrature permettant l'obtention de transitions du signal correspondant à des épaisseurs de quelques centièmes de millimètre.

Dans une application avantageuse de l'invention, le dispositif comporte un circuit intégré spécifique (ASIC) pour réaliser le traitement numérique du signal et coopérer avec un microprocesseur d'une machine de traitement de feuilles.

Selon une autre caractéristique avantageuse de l'invention, ledit ASIC comporte:

- une partie de compteur/décompteur pour compter les impulsions du codeur,
- et une partie interface avec le microprocesseur pour lire et programmer des paramètres à l'aide des ordres suivants:

  . lecteur du compteur,
  . chargement d'une consigne pour programmer la valeur de déclenchement d'un double,
  . pré-chargement d'une valeur de compteur,
  . chargement des paramètres, et
  . lecture des états.

De ces particularités découle une simplification extrême de l'utilisation de la machine de traitement du courrier par suppression des interventions de l'utilisateur dues aux nécessités de réglage en fonction des différentes qualités de document par exemple.

D'autres particularités et avantages de l'invention ressortiront plus clairement de la description ci-dessous, donnée en regard des dessins ci-joints, et qui fera bien comprendre comment l'invention peut être réalisée.

Sur les dessins,

la figure 1 est une vue schématique d'un système de palpage et codage selon l'invention,
la figure 2 est une vue en coupe suivant la ligne II-II de la figure 1,

la figure 3 est un schéma du système de fonctionnement d'un exemple d'émetteur-capteur selon l'invention,

la figure 4 est une représentation d'un exemple de signal obtenu par le dispositif de l'invention, et

la figure 5 est un exemple d'un schéma d'ensemble d'un système de détection de double pour courrier, conformément à un mode de réalisation de l'invention.

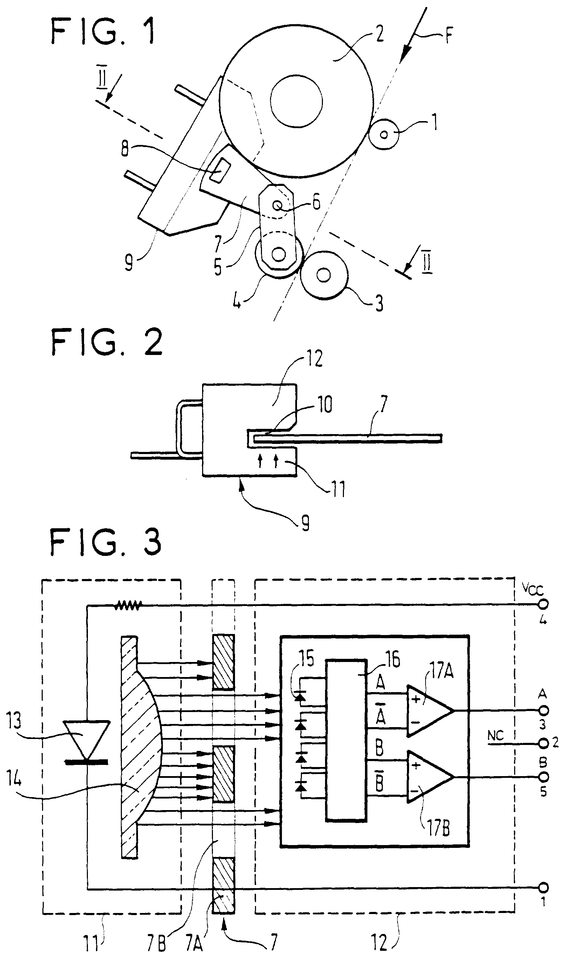

La figure 1 représente schématiquement les éléments principaux d'un palpeur selon un exemple de réalisation de l'invention, d'un dispositif de mesure de l'épaisseur de feuilles de papier en défilement, dans un plan perpendiculaire au papier, et suivant le sens de défilement. Les feuilles de papier arrivent normalement une par une suivant la flèche F et passent entre un galet 1 et un rouleau d'entrainement 2. Les axes peuvent être fixes, au moins l'un peut être sollicité vers l'autre. Les feuilles pénètrent ensuite entre le galet fixe 3 et un galet mobile 4 sollicité élastiquement contre le galet 3. Le galet mobile 4 est porté par un bras 5 articulé sur l'axe 6. Pour donner une échelle à titre d'exemple, ce bras peut avoir une longueur d'1 cm environ. Le dispositif peut comporter par exemple un ressort spirale (non représenté) fixé sur l'axe 6 et sollicitant le bras 5 vers la droite de la figure. Au bras 5 est fixé un drapeau codeur 7, constitué par exemple par un secteur circulaire, et comportant un réseau de fentes radiales représentées et désignées globalement en 8. En fonction de l'épaisseur des feuilles qui défilent, suivant le trait interrompu dans le prolongement de la flèche F, le galet mobile 4 s'écarte plus ou moins du galet fixe 3, ce qui fait osciller le drapeau 7 autour de l'axe 6. Ainsi, la partie du drapeau portant le réseau de fentes 8 oscille entre un émetteur de rayons lumineux et un récepteur recevant des périodes d'éclairement et des périodes d'obscurité.

Au passage de chaque fente, ou chaque groupe de fentes, le récepteur émet un signal. On voit que l'épaisseur du produit plat passant entre le galet fixe 3 et le galet mobile 4 est mesurable par le nombre de signaux émis. La précision de la mesure est déterminée par l'épaisseur qui déclenche un signal. Les signaux peuvent avantageusement avoir la forme d'impulsions électriques.

Avantageusement, un tel ensemble émetteur-récepteur est renfermé dans un composant 9 qui peut présenter la forme représentée en coupe sur la figure 2. Ce composant comporte une fente 10 dans laquelle est engagé le drapeau. D'un côté de la fente, le composant renferme un compartiment 11 contenant des moyens d'émission de lumière, et de l'autre côté, un compartiment 12 contenant des moyens de capteur des signaux lumineux et des moyens de traitement de ces signaux.

La figure 3 est un schéma d'un exemple d'un tel composant. Un cadre 11 représente le compartiment d'émission de lumière, et un cadre 12 représente le compartiment de capteur et de traitement des signaux reçus. Entre les deux, on a représenté en coupe le drapeau 7, avec des pleins 7A et des fentes 7B. La source lumineuse peut par exemple être une simple diode électroluminescente (DEL) 13 émettant un faisceau de rayons parallèles grâce à une lentille 14.

A l'opposé de l'émetteur se trouve le circuit de détection intégré, composé d'un réseau de quatre diodes 15 et d'un étage 16 de traitement du signal qui génère des formes d'ondes numériques.

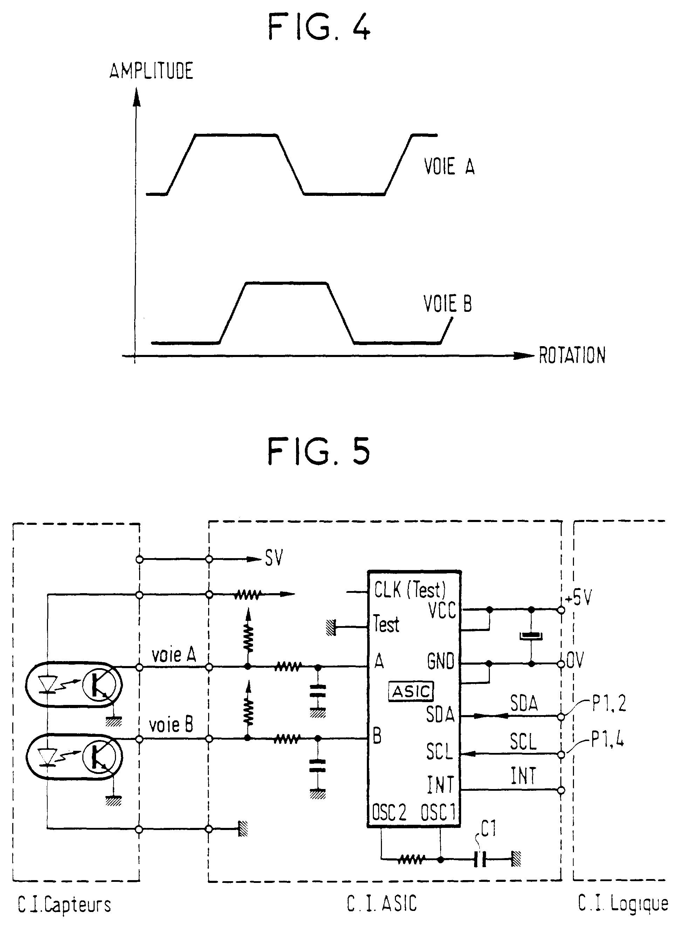

Les photodiodes sont disposées en fonction du rayon et de la configuration du drapeau codeur. Elles sont également espacées de manière à ce qu'une période d'éclairement sur une paire de détecteurs corresponde à une période d'obscurité sur la paire adjacente. Les signaux ainsi issus des photodiodes sont ensuite appliqués au circuit 16 de traitement qui les restitue sous forme de signaux A, $\overline{A}$ et B, $\overline{B}$ sur les sorties 3 et 5. Deux comparateurs 17A et 17B génèrent enfin les sorties des voies A et B. En raison de cette technique de mise en phase, la sortie numérique de la voie A est en quadrature par rapport à celle de la voie B (déphasage de 90°). Un exemple des formes d'ondes en sortie des voies A et B est représenté sur la figure 4 qui indique en ordonnée l'amplitude du signal, et en abscisse la rotation du drapeau, c'est-à-dire le passage d'une fente qui laisse passer la lumière, ou l'occultation. Soit en pratique l'état 1 ou 0.

Il existe de tels composants disponibles sur le marché. Par exemple le codeur optique incrémentiel à deux voies série HEDS 9100 de la société HEWLETT-PACKARD.

Le tableau suivant donne des exemples de résultats de détection de doubles.

La première colonne indique le grammage du papier et la seconde son épaisseur. Les troisième et quatrième colonnes indiquent le nombre de pas ou d'impulsions respectivement au passage d'une et de deux feuilles. La cinquième colonne indique le nombre d'impulsions que l'on choisira pour déclencher la présence d'un double.

| grammage papier | épaisseur mesurée | lecture 1 feuille | lecture 2 feuilles | Seuil de détection double |
|---|---|---|---|---|
| 60 | 8/100 | 2 à 3 | 5 à 6 | 4 |
| 80 | 10/100 | 4 | 8 | 6 |
| 120 blanc | 13/100 | 5 à 6 | 10 à 11 | 8 |
| 120 jaune | 14/100 | 5 à 6 | 11 à 12 | 8 |
| 120 encre | 14/100 | 6 | 12 | 8 |
| 80 photocopie blanc | | 4 | 7 à 8 | 6 |

Le contrôle du bon fonctionnement du détecteur de double peut se faire en insérant une feuille pliée 2/3-1/3 en seconde position. Il doit y avoir arrêt par détection de double.

Ces impulsions peuvent avantageusement être gérées par un circuit intégré spécifique (ASIC) réalisant l'interface avec un microprocesseur. La figure 5 représente un exemple d'un montage. Sur la gauche est représenté un circuit intégré émetteur-capteur d'un modèle plus simple que le précédent, les deux voies de sortie A et B étant connectées à travers des filtres aux entrées A et B de l'ASIC, formant interface avec un microprocesseur dont les entrées sont schématisées à droite. L'ASIC dont les ports sont repérés au moyens des désignations usuelles est constitué de façon à pouvoir fournir au microprocesseur les informations dont il peut avoir besoin pour assurer les diverses fonctions projetées. On pourra ainsi, à partir du microprocesseur commander la valeur du seuil de détection, par exemple de double ou d'un autre nombre choisi de feuilles, qui provoquera l'arrêt de la machine, obtenir si on le désire la mesure exacte de l'épaiseur du papier qui défile, etc. On peut ainsi supprimer les interventions de l'utilisateur dues aux nécessités de réglage en fonction des épaisseurs de papier et des différentes qualités de document par exemple.

On décrit maintenant un mode opératoire d'apprentissage ou mise en route d'une opération de traitement à l'aide de l'ordinogramme suivant :

EP 0 548 874 B1

MACHINE AU REPOS

APPUI SUR START-CYCLE POUR
CHARGEMENT D'UNE FEUILLE PAR
L'ALIMENTEUR AUTOMATIQUE

MESURE

non — DETECTEUR DE DOUBLE VALIDE ?

oui

L'OPERATEUR VERIFIE LA PRESENCE
D'UNE FEUILLE ET UNE SEULE

RETRAIT DU DOCUMENT EN — oui
CAS DE DEFAUT ?

non

L'APPRENTISSAGE EST TERMINE

APPUI SUR LA TOUCHE START-CYCLE
POUR VALIDATION DE LA MESURE
ET
LANCEMENT DE LA SUITE DU CYCLE

PRESENCE DOUBLE ? — oui
(LECTURE STATUS ASIC)

ARRET MACHINE

non

PLIAGE ET INSERTION

non — PAUSE DEMANDEE — oui

CHARGEMENT D'UNE FEUILLE PAR
L'ALIMENTEUR AUTOMATIQUE
ET SUITE

Si l'on désire ne pas utiliser le détecteur de double, on ne le validera pas et l'on passe directement après la présence double qui commande l'arrêt machine.

**Revendications**

1. Dispositif de mesure d'épaisseur d'une feuille de courrier en défilement dans une machine de pliage et d'insertion de documents avant affranchissement comportant des moyens de palpage fournissant des signaux électriques et des moyens de traitement desdits signaux électriques, les moyens de palpage comportant un drapeau (7) solidaire d'un levier de palpage (5), coopérant avec un émetteur lumineux et un détecteur (12) sensible aux rayons lumineux, caractérisé en ce que le drapeau (7) est constitué par un secteur comportant des fentes multiples (7B), le drapeau étant disposé pour pouvoir occulter par les parties pleines situées entre les fentes des rayons lumineux dirigés vers le détecteur, en ce que le détecteur est un codeur optique (9) délivrant des impulsions à chaque passage d'une fente du drapeau devant ledit codeur et en ce que le codeur optique (9) est un codeur incrémentiel à deux voies de sortie (A, B) disposées en quadrature permettant l'obtention de transitions du signal correspondant à des épaisseurs de quelques centièmes de millimètre.

2. Dispositif selon la revendication 1, caractérisé en outre en ce qu'il comporte un circuit intégré spécifique (ASIC) pour réaliser le traitement numérique du signal et coopérer avec un microprocesseur d'une machine de traitement des feuilles.

3. Dispositif de la revendication 2, dans lequel ledit (ASIC) comporte:

   - une partie de compteur/décompteur pour compter les impulsions du codeur,
   - et une partie interface avec le microprocesseur pour lire et programmer des paramètres à l'aide des ordres suivants:

     . lecteur du compteur,
     . chargement d'une consigne pour programmer la valeur de déclenchement d'un double,
     . pré-chargement d'une valeur de compteur,
     . chargement des paramètres, et
     . lecture des états.

**Patentansprüche**

1. Vorrichtung zur Messung der Dicke eines in Bewegung befindlichen Briefblatts in einer Falt- und Kuvertiermaschine für Dokumente vor dem Frankieren, mit Tastmitteln, die elektrische Signale liefern, und Mitteln zur Verarbeitung dieser elektrischen Signale, wobei die Tastmittel eine Flagge (7) aufweisen, die mit einem Tasthebel (5) fest verbunden ist und mit einer Lichtquelle und einem Lichtdetektor (12) zusammenwirkt, der auf die Lichtstrahlen anspricht, dadurch gekennzeichnet, daß die Flagge (7) aus einem Sektor mit zahlreichen Schlitzen (7B) besteht und so angeordnet ist, daß sie durch die nicht transparenten Bereiche zwischen den Schlitzen Lichtstrahlen abdeckt, die auf den Detektor gerichtet sind, daß der Detektor ein optischer Kodierer (9) ist, der Impulse bei jedem Durchgang eines Schlitzes der Flagge vor dem Kodierer liefert, und daß der optische Kodierer (9) ein inkrementaler Kodierer mit zwei Ausgangskanälen (A, B) ist, die in Phasenquadratur liegen und einen Signalübergang ergeben, wenn die Dicke um einige Hundertstel Millimeter variiert.

2. Vorrichtung nach Anspruch 1, dadurch gekennzeichnet, daß sie weiter einen anwenderspezifischen integrierten Baustein (ASIC) besitzt, der die digitale Verarbeitung des Signals durchführt und mit einem Mikroprozessor einer Maschine zur Bearbeitung von Blättern zusammenwirkt.

3. Vorrichtung nach Anspruch 2, bei der das Bauteil (ASIC) aufweist:

   - einen Vorwärts-Rückwärtszähler, der die Impulse des Kodierers zählt,
   - und eine Schnittstelle zum Mikroprozessor, um Parameter mit Hilfe folgender Befehle zu lesen und zu programmieren:

     . Auslesen des Zählers,
     . Laden eines Sollwerts zur Programmierung des Schwellwerts für eine Dublette,
     . Laden des Zählers mit einem Wert zu Beginn,
     . Laden der Parameter,
     . Ablesen der Zählzustände.

**Claims**

1. Device for measuring the thickness of a sheet of mail passing through a machine for folding and inserting documents before franking, comprising feeler means, which supply electrical signals, and means for processing the said electrical signals, the feeler means comprising a marker (7) which is connected to a feeler lever (5) and cooperates with a light emitter and a detector (12), which is sensitive to light rays, characterised in that the marker (7) consists of a sector comprising multiple apertures (7B), the marker being arranged in such a way that it can block out the light rays which are directed towards the detector, by means of the solid parts located between the apertures, and in that the detector is an optical coder (9), which delivers pulses at each passage of an aperture of the marker in front of the said coder, and in that the optical coder (9) is an incremental coder having two output channels (A, B) arranged in quadrature, making it possible for signal transitions corresponding to thicknesses of some hundredths of a millimetre to be obtained.

2. Device according to claim 1, further characterised in that it comprises a specific integrated circuit (ASIC) for performing the digital processing of the signal and cooperating with a microprocessor of a sheet-processing machine.

3. Device according to claim 2, in which the said (ASIC) comprises:

   - an up/down counter part for counting the pulses of the coder,
   - and a part interfacing with the microprocessor for reading and programming the parameters with the aid of the following commands:

     . reading the counter,
     . loading an instruction for programming the release value of a double,
     . pre-loading a counter value,
     . loading the parameters, and
     . reading the statuses.

FIG. 1

FIG. 2

FIG. 3

8

# FIG. 4

# FIG. 5